# EUROPÄISCHE PATENTSCHRIFT

(11) **EP 3 577 177 B1**
(45) Veröffentlichungstag und Bekanntmachung des Hinweises auf die Patenterteilung: **27.07.2022**
(21) Anmeldenummer: 18703549.8
(22) Anmeldetag: 01.02.2018
(51) Int. Cl.: C09D 133/06, C23C 22/82, G11B 7/24

(54) **TRANSPARENTE, KRATZFESTE SCHICHT MIT ANTIFOULING-EIGENSCHAFTEN UND VERFAHREN ZUR HERSTELLUNG DERSELBEN**
TRANSPARENT, SCRATCH RESISTANT LAYER WITH ANTIFOULING PROPERTIES AND PROCESS FOR ITS PREPARATION
COUCHE TRANSPARENTE, RÉSISTANTE AUX RAYURES, AYANT DES PROPRIÉTÉS ANTISALISSURES ET SON PROCÉDÉ DE PRÉPARATION

(30) Priorität: 01.02.2017 DE 102017101978
(43) Veröffentlichungstag der Anmeldung: 11.12.2019
(73) Patentinhaber: Fachhochschule Kiel, 24149 Kiel (DE)
(72) Erfinder: ES-SOUNI, Mohammed, 24247 Mielkendorf (DE)
(74) Vertreter: Hamm&Wittkopp Patentanwälte PartmbB
(86) Internationale Anmeldenummer: PCT/EP2018/052486
(87) Internationale Veröffentlichungsnummer: WO 2018/141832

(56) Entgegenhaltungen:
- WO-A1-2014/102271
- DE-C1- 10 151 853
- US-A1- 2016 146 978
- DATABASE COMPENDEX [Online] ENGINEERING INFORMATION, INC., NEW YORK, NY, US; 29. März 2005 (2005-03-29), MACAK J M ET AL: "High-aspect-ratio TiO2 nanotubes by anodization of titanium", XP002779866, Database accession no. E2005179054162 -& ANGEWANDTE CHEMIE - INTERNATIONAL EDITION 20050329 WILEY-VCH VERLAG DE, Bd. 44, Nr. 14, 29. März 2005 (2005-03-29) , Seiten 2100-2102, XP002780828, DOI: 10.1002/ANIE.200462459

## Beschreibung

Bei der Erfindung handelt es sich um eine für sichtbares Licht transparente Schutzschicht, die sehr kratzfest ist und der das Anhaften von Biofilmen und Mikroorganismen (Bio-Fouling) verhindern kann.

Transparente Schutzschichten mit verbesserter Kratzfestigkeit sind z.B. aus der DE 10 2006 050 748 A1 bekannt. Hier werden nach einem speziellen Verfahren hergestellte nanoscalige Partikel einem polymeren Bindemittel zugegeben, welches dann zur Auftragung als Lack vorgesehen ist.

Aus der DE 101 51 853 C1 ist es bekannt, Schutzschichten für optische Datenspeicher zur Erhöhung der Kratzfestigkeit kolloidale Metalloxide beizugeben.

Die Kratzfestigkeit bleibt aber hier allgemein durch das zu beschichtende Substrat und die Art der Vorbehandlung desselben limitiert. Eine hohe, dauerhafte und auch im Bereich von unter 100nm homogene Kratzfestigkeit ist so nicht zu erreichen.

Die US 2016/0146978 hat mehrere aufeinander aufgetragene, zweidimensionale Schichten als Kratzschutz und als Polarisationsfilter zum Inhalt. Eine auch im Bereich von unter 100 nm homogene Kratzfestigkeit ist nicht vorgesehen.

Anti-Fouling-Anstriche für Schiffsrümpfe sind allgemein bekannt, so kann z.B. Tributylzinnmethacrylat verwendet werden, hier sind allerdings nachteilige Wirkungen auf das Ökosystem zu befürchten.

Siedeln sich Mikroorganismen, Pflanzen oder Tiere am Rumpf von Schiffen an, so wird dies als Fouling bezeichnet. Die anheftenden Organismen erhöhen den Strömungswiderstand des Schiffes und führen dadurch zu einer Reduktion der Geschwindigkeit und einem Anstieg des Treibstoffbedarfs. Zudem kann ein bewachsener Schiffsrumpf für den Transport von gebietsfremden Arten, die natürlicherweise nicht in dem Ökosystem vorkommen, verantwortlich sein. Diese können unter Umständen Probleme bereiten, entweder als Krankheitserreger oder durch Verdrängung heimischer Arten. In manchen Fällen können die Organismen auch die besiedelte Oberfläche beschädigen.

Um dem Fouling entgegenzuwirken, werden die Schiffsrümpfe daher mit Anti-fouling-Beschichtungen behandelt, die das Ansiedeln von Bewuchsorganismen verhindern sollen. Die etablierten Beschichtungen enthalten meist biozide Wirkstoffe, die nach und nach ins umgebende Wasser freigesetzt werden.

Als Wirkstoffe in Antifouling-Beschichtungen wurden früher zinnorganische Breitbandbiozide verwendet. Die bekannteste Verbindung aus dieser Gruppe ist das Tributylzinn (TBT). Der Einsatz von zinnorganischen Verbindungen in Antifouling-Beschichtungen ist jedoch seit 2008 international verboten, da diese Substanzen lange in der Umwelt verbleiben, hochgiftig sind und hormonell auf Wasserlebewesen wirken. Derzeit werden in biozidhaltigen Antifouling-Beschichtungen überwiegend Kupferverbindungen als Wirkstoffe eingesetzt. Zur Verstärkung der Effektivität werden diese häufig mit weiteren Bioziden kombiniert, Zwar sind diese Antifouling-Biozide nicht so extrem schädlich wie TBT, dennoch handelt es sich um hochwirksame und oft schwer abbaubare Substanzen, die ebenfalls unerwünschte Wirkungen auf die im Wasser lebenden Organismen haben können.

Es ist daher ein hoher Bedarf an Antifouling-Beschichtungen, die auf die Freisetzung von bioziden Substanzen verzichten können, gegeben.

Aus der DE 601 00 271 T2 ist es bekannt, Polyoxyalkylen-Silylester-Blockcopolymere in Anti-Fouling-Anstrichen für Schiffsrümpfe zu verwenden.

Die US 2015/0361279A1 (Essilor) hat es zum Inhalt, Brillengläser zwecks Verbesserung der Antifouling-Eigenschaften mit einer transparenten Schutzschicht aus verschiedenen Silanen und Metallfluoriden zu versehen.

J. Vanpaemel et al. J.Phys. Chem. 2015, 119, S. 2105-2112 (DOI: 10.1021/ jp508142m) beschreiben die Erzeugung eines Netzes von vertikalen und horizontalen Poren in der Aluminiumoxidschicht auf einem Aluminiumfilm.

N. Berger, M. Es-Souni et al., Appl. Phys. A (2016) 122:192 (DOI 10.1007/s00339-016-9729-z) lehren die Erzeugung von Kanälen (Nanorods NR) in Aluminiumoxid-Templates.

J.M. Macak, H. Tsuchiya und P. Schmuki, Angew. Chem. Int. Ed. 2005, 44, 2100-2102 (DOI: 10.1002/anie.200462459) beschreiben die Erzeugung von Kanälen (Nanorods NR) in Titandioxid-Templates, wobei die Bildung hochgeordneter kanalartiger Strukturen aus Titandioxid durch anodisierende Oxidation von Titan beschrieben wird.

Aus der DE 101 51 853 C1 sind durch Strahlungshärtung erhaltene Schutzschichten für optische Datenspeicher auf Acrylatbasis bekannt, denen zur Erhöhung der Kratzfestigkeit kolloidale Metalloxide, insbesondere kolloidales Siliziumdioxid, beigegeben ist.

Die US 2016/0146978 offenbart mehrere aufeinander aufgetragene, teilweise photohärtbare Schichten als Kratzschutz auf einem Polarisationsfilter.

Die WO 2014/102271 offenbart eine Methode zur Herstellung einer Antifouling Schicht auf optischen Träger durch Versetzen des Trägers mit verschiedenen Silanen und Metallfluorid.

Es ist Aufgabe der Erfindung eine sehr kratzfeste, für sichtbares Licht transparente Schutzschicht, die das Anhaften von Biofilmen und Mikroorganismen (Bio-Fouling) verhindern kann, zur Verfügung zu stellen.

Des Weiteren ist es Aufgabe der Erfindung eine sehr kratzfeste, für sichtbares Licht transparente Schutzschicht, die das Anhaften von Biofilmen und Mikroorganismen (Bio-Fouling) verhindern kann zur Verfügung zu stellen, die über eine dauerhafte und auch im Bereich von unter 100 nm homogene Kratzfestigkeit verfügt.

Eine weitere Aufgabe der Erfindung ist es, eine sehr kratzfeste, für sichtbares Licht transparente Schutzschicht, die das Anhaften von Biofilmen und Mikroorganismen (Bio-Fouling) verhindern kann zur Verfügung zu stellen, die über eine dauerhafte und auch im Bereich von unter 100 nm homogene Kratzfestigkeit verfügt und die auf die Freisetzung von bioziden Verbindungen verzichten kann.

Die Aufgabe der Erfindung wird gelöst durch eine Schutzschicht (8) für eine Fläche, dadurch gekennzeichnet, dass die Schutzschicht (8) aus einer dreidimensionalen Struktur besteht, wobei die dreidimensionale Struktur von Kanälen (5) in einer Matrix (4), auch als kompakte Matrix bezeichnet, gebildet wird und wobei die Kanallänge gleich oder größer ist als der Kanaldurchmesser und wobei die Kanäle im Wesentlichen parallel zur Flächennormale der Fläche ausgerichtet sind und wobei der Kanaldurchmesser 10 nm bis 200 nm, bevorzugt 20 nm bis 180 nm, besonders bevorzugt 30 nm bis 150 nm beträgt und die Kanallänge 0,01 µm bis 10 µm, bevorzugt 0,02 µm bis 10 µm, besonders bevorzugt 0,03 µm bis 10 µm beträgt und wobei die Kanäle über eine Innenfläche (7) verfügen und wobei die Innenfläche (7) zumindest teilweise beschichtet ist und wobei die Beschichtung der Innenflächen organische Polymere aufweist.

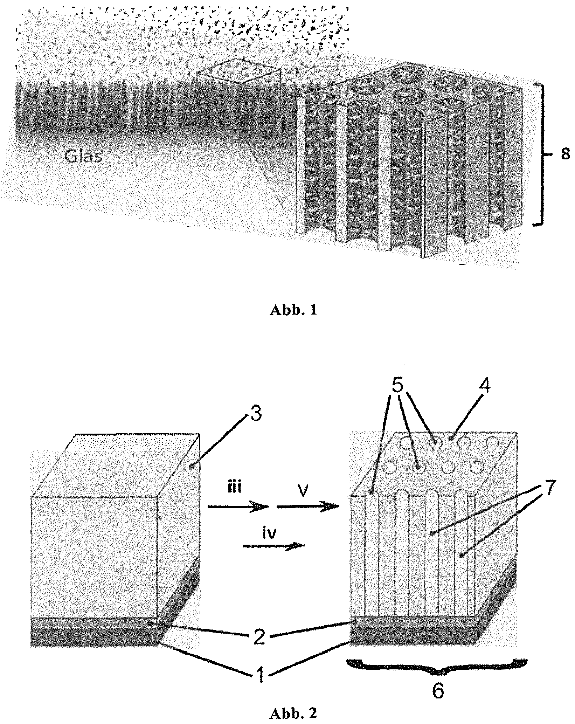

Eine schematische Darstellung des der Erfindung zugrundeliegenden Prinzips findet sich in Abbildung 1. Der Ausschnitt zeigt schematisch die Anbindung des organischen Polymers an die Poreninnenwände.

Die Matrix besteht aus Metall- oder Halbmetalloxiden, bevorzugt sind die Metalle oder Halbmetalle der Oxide ausgewählt aus der Gruppe Aluminium (Al), Titan (Ti), Niob (Nb) und Silizium (Si). Besonders bevorzugt Aluminium (Al) und Titan (Ti), insbesondere Aluminium (Al).

Die organischen Polymere zur Beschichtung der Innenflächen (7) der Kanäle sind bevorzugt ausgewählt aus den dem Fachmann bekannten Antifouling Materialien, sogenannten "non-fouling materials", "low-fouling biomaterials" und/oder SAM-Polymers^{®} (Sustainable Active Microbicidal Polymers), wobei letztere erstmals von der damaligen Degussa AG Creavis Technolgies & Innovation auf den Markt gebracht wurden (https://www.kunststoffweb.de/neueprodukte/Neue_Klasse_von_ Polymer-bioziden_n101163).

Eine Auswahl an sogenannten "non-fouling materials" und "low-fouling biomaterials" findet der Fachmann beispielsweise in Chen et al. "Surface hydration: Principles and applications toward low-fouling/nonfouling biomaterials" Polymer Volume 51, Issue 23, 29 October 2010, Pages 5283-5293 (http://dx.doi.org/10.1016/ j.polymer.2010.08.022).

Insbesondere werden hydrophile und/oder zwitterionische und/oder ampholytische Polymere als Antifouling Materialien eingesetzt. Die hydrophilen, organischen Polymere sind besonders bevorzugt ausgewählt aus der Gruppe:
Polyethylenglycol PEG und PEG-basierte Polymere, Oligo(ethylenglycol) (OEG-SAM), Polyethylenoxid (PEO), Polypropylenoxid (PPO), sowie Kombinationen (PEO-PPO-PEO), Polystyrol-*graft*-poly(ethylenglycol) PS-g-PEG, Poly(l-lysine)-*graft*-poly(ethylenglycol) polyLL-g-PEG, Polypyridine-graft-poly(ethylenglycol) polyPy-g-PEG, Poly(ethylenglycol)-Poly(alkyl phosphonat)Terpolymers PEG-poly(phosphonat) terpolymer, Polyacrylamid (PAM), Poly(oligo(ethylene glycol) methyl ether methacrylat) poly(OEGMA)-Poly(di(ethylenglycol) methylether methacrylat) (poly(DEGMA)), Poly-[tri(ethylenglycol) methacrylat] (poly(TEGMA)),Poly[tri(ethylenglycol) ethyl ether methacrylate] (poly(TEGMA-EE)),Poly(2-hydroxyethyl methacrylat) (poly(HEMA)), Poly(ethylenglycol) methyl ether methacrylat (poly(PEGMA-ME)), Poly(2-hydroxypropyl methacrylat) (poly(HPMA)), Poly[N-(2-hydroxypropyl) methacrylamid] (poly(HPMAA)), Poly(oligo(ethylenglycol) methyl ether methacrylat) (poly(OEGMA-ME)), Poly(poly(ethylene glycol) methacrylate) (polyPEGMA), Poly(4-(poly(ethylenglycol) methyl ether)-styrol) (PSPEG-ME), Poly(ethylene oxide) - poly(propylene oxide) - Poly-(ethylene oxide) (PEO-PPO-PEO), Poly-2-methyl-2-oxazolin (PMOXA), SAM-Polymere auf Basis von Peptiden, Polysaccharide, Dextrane, Mannitol-SAM, Polyglycerol-Dendrone, Tetraglyme, Polyvinylalkohol (PVA) und Polyamide, die mit Acetylchlord funktionalisiert sind.

Die zwitterionischen Polymere sind bevorzugt ausgewählt aus der Gruppe der Polybetaine und Polyampholyte. Besonders bevorzugt sind die Polybetaine ausgewählt aus der Gruppe:
Poly(Carboxybetain-acrylamide) (poly(CBAA)), Poly(Carboxybetain-methacrylat) (poly(CBMA)), Poly(sulfobetain-methacrylat) (poly(SBMA)), Poly-(2-methacryloyloxyethyl-phosphorylcholin) (poly(MAOEPC)), Phosphobetainmethacrylat (PBMA), Phosphorylcholin (PC)-SAM, 2Methacryloyloxylethylphosphorylcholin (MPC),

Besonders bevorzugt sind die Polyampholyte ausgewählt aus der Gruppe: Peptidische Oberflächen aus Aminosäuren,
3-Sulfopropylmethacrylat/ [2-(methacryloyloxy)ethyl] trimethylammonium (SMA/M-TMA)-SAM, 12-Mercaptododecansäure/[2-(methacryloyloxy)ethyl] trimethylammonium (MDA/MAOE-TMA)-SAM, 11-mercaptoundecylphosphonat/ [2-(methacryloyloxy)ethyl] trimethylammonium (PM/MAOE-TMA)-SAM, 2-(methacryloyloxy)ethyl]-trimethylammonium chlorid/11-mercaptoundecylsulfonsäure poly(TM-SA), 2-methacryloxyethanesulfonate/2-methacryloyloxyethyltrimethylammonium Poly(MES-METMA), Poly(diallyl-dimethylammonium chlorid)/ poly(styrolsulfonat) (PDDA/PSS).

Die Aufgabe der Erfindung wird des Weiteren gelöst durch die Bereitstellung eines Verfahrens zum Aufbringen einer Schutzschicht (8) auf einen Träger (1), umfassend die Schritte
i. Aufbringen einer Adhäsionsschicht (2) auf einen Träger (1)
ii. Aufbringen einer Metall- oder Halbmetallschicht (3) auf die Adhäsionsschicht (2)
iii. Anodisierung der Metall- oder Halbmetallschicht zu Metall- oder Halbmetalloxid gegebenenfalls mit gleichzeitiger Messung der Stromdichte während des Vorganges
iv. Beendigung der Anodisierung anhand der Messwerte für die Stromdichte und/oder der auftretenden Transparenz der oxidierten Schicht
v. Aufweitung der Poren zu den Kanälen (5) mit Innenflächen (7)
vi. Reinigung und Trocknung des in den Schritten i - v erzeugten Substrates (6)
vii. Silanisierung des Substrates
   viia. Optional Reinigung des silanisierten Substrates
   viib. Gegebenenfalls Aufbringen von Polymerisations-Initiatoren
   viii. Aufbringen von Monomeren und/oder Oligomeren
   ix. Polyreaktion der Monomeren und/oder Oligomeren zu organischen Polymeren,
wobei die Reihenfolge der Schritte viib. und viii. beliebig gewählt sein kann.

Abbildung 2 zeigt schematisch die Erzeugung eines Substrates (6), vor Belegung der Innenflächen der Kanäle, bei dem die Matrix aus Aluminiumoxid, erzeugt durch Anodisierung eines dünnen Aluminium-Films gebildet ist.

Als Träger (1) kommen diverse Materialien in Frage, Beispiele für diese Materialien sind Glas, anorganische Oxide, Halbleiteroxide, Silicate, Metalle, Metalloxide, organische Polymere oder Verbundwerkstoffe. Bevorzugt ist der Träger ausgewählt aus der Gruppe der für das sichtbare Licht transparenten Materialien.

Als Adhäsionsschicht (2) können Metalle fungieren, bevorzugt sind die Metalle ausgewählt aus der Gruppe Titan (Ti), Niob (Nb), Chrom (Cr), Platin (Pt), Palladium (Pd) besonders bevorzugt ist Ti. Bevorzugt werden die Metalle z.B. durch Sputtern in Schichten von einer Dicke zwischen 2 und 6 nm aufgetragen.

Das Aufbringen der Metall- oder Halbmetallschicht auf die Adhäsionsschicht kann beispielsweise mittels eines Elektronenstrahlverdampfers oder durch thermisches Aufdampfen durchgeführt werden.

Die Metalle oder Halbmetalle können ausgewählt sein aus der Gruppe: Aluminium (Al), Titan (Ti), Niob (Nb) und Silizium (Si). Bevorzugt sind die Metalle oder Halbmetalle ausgewählt aus der Gruppe Aluminium (Al) und Titan (Ti), besonders bevorzugt ist Aluminium (Al).

Die Anodisierung der Metall- oder Halbmetallschicht zu einer Matrix aus Metall- oder Halbmetalloxid (4) kann potentiostatisch, bei konstanter Spannung oder bei konstantem Strom erfolgen.

Zur Anodisierung können Spannungs-/Stromversorgungs- und -messgeräte z.B. der Firma Keithley verwendet werden. Die Anodisierung erfolgt bei Spannungen zwischen 10 und 200 V, bevorzugt zwischen 10 und 80 V.

Die Anodisierung findet in wässrigen Elektrolyt-Lösungen statt.

Die Elektrolyt-Lösungen werden dabei entsprechend dem Fachmann allgemein bekannter Art und Weise und insbesondere entsprechend N. Berger, M. Es-Souni et al., Appl. Phys. A (2016) 122:192 (DOI 10.1007/s00339-016-9729-z) und J.M. Macak, H. Tsuchiya und P. Schmuki, Angew. Chem. Int. Ed. 2005, 44, 2100 -2102 (DOI: 10.1002/anie.200462459) an die Metall- oder Halbmetallschicht, die anodisiert werden soll, angepasst.

Als Elektrolyt-Lösung wird dabei im Fall von Aluminium eine oxidierende Säure verwendet. Oxidierende Säuren sind dem Fachmann allgemein bekannt. Bevorzugt werden oxidierende Säuren verwendet, die Sauerstoff enthalten, Beispiele für derartige oxidierende Säuren sind Carbonsäuren, Schwefelsäure, Chromsäure, Salpetersäure, Perchlorsäure, Hypochlorige Säure, Chlorsäure und Phosphorsäure. Beispiele für Carbonsäuren sind Oxalsäure, Essigsäure, Ameisensäure, Bernsteinsäure, Zitronensäure. Die Konzentration der Lösung liegt im Bereich von 0,05 bis 1 M, bevorzugt 0,1 bis 0,9 M, besonders bevorzugt 0,2 bis 0,8 M.

Zur Anodisierung einer Titan-Schicht werden vorzugsweise wässrige Elektrolyt-Lösungen verwendet. Es hat sich als vorteilhaft erwiesen den pH-Wert während der Anodisierung von Titan durch Pufferung zu kontrollieren und Salze oxidierender Säuren, statt der Säure direkt, einzusetzen. Des Weiteren sollte bei der Anodisierung von Ti eine fluoridhaltige Verbindung (HF, NH₄F), welche die Bildung von TiF₆²-ermöglicht, zugegen sein.

Bevorzugt besteht die Elektrolyt-Lösung zur Anodisierung von Titan aus 0,5 -2 M (NH₄)₂SO₄-Lösung unter Zugabe von 0,2 bis 1 Gew.-% NH₄F, besonders bevorzugt aus 1 M (NH₄)₂SO₄-Lösung unter Zugabe von 0,5 Gew,-% NH₄F.

Die Temperatur der Lösung während der Anodisierung liegt im Bereich zwischen 0 und 40 °C, bevorzugt zwischen 2 und 30°C, besonders bevorzugt zwischen 3 und 26°C.

Dabei sind die Temperaturen den Löslichkeiten der Elektrolyte in dem Fachmann allgemein bekannter Vorgehensweise anzupassen.

Die Messung der Stromdichte gegen die Zeit kann nach dem Fachmann allgemein bekannten Methoden erfolgen, beispielsweise können Potentiostaten/Galvanostaten (z.B. Princeton Potentiostat/Galvanostat Model 263 A) und Referenzselektroden z.B. des Typs Silber/Silberchlorid verwendet werden.

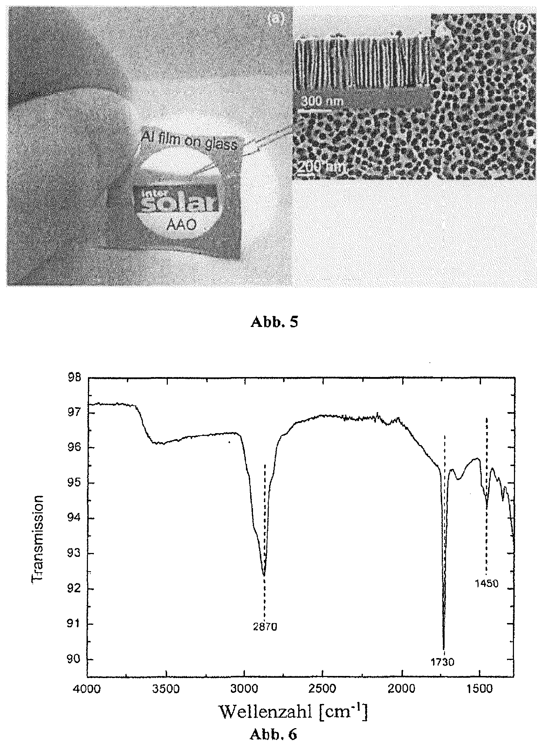

Während der Anodisierung von Aluminium kommt es zunächst zu einem Abfall der Stromdichte aufgrund der Bildung von Aluminiumoxid. Anschließend ist in der Regel ein Anstieg der Stromdichte aufgrund der beginnenden Auflösung des Aluminiumoxids zu beobachten. Darauf folgt eine Phase in der das Niveau der Stromdichte relativ konstant ist, hier findet das vertikale Wachsen der Poren statt. Haben die Poren ihre endgültige Länge erreicht, kann es zunächst zu einem Abfall der Stromdichte kommen, gefolgt von einem deutlichen Anstieg der Stromdichte, welche das Ende der Oxidation und die Auflösung der Oxidschicht anzeigt. Abbildung 5 zeigt zur Verdeutlichung einige exemplarische Stromdichteverläufe gemessen gegen die Zeit, die Temperatur während der Anodisierung des Aluminiums lag bei 23.5 °C als Lösung wurde 0,6 M Oxalsäure verwendet.

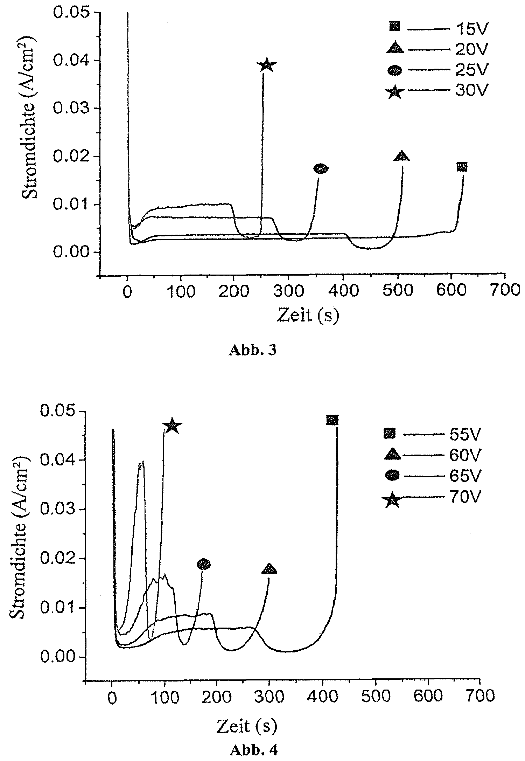

Die Beendigung der Anodisierung erfolgt entweder bei deutlich sichtbarer Transparenz der Schicht oder zu Beginn des erneuten Anstiegs der Stromdichte nach Durchschreiten des Bereichs konstanter Stromdichte. Es ist aus Abbildung 3 zu erkennen, dass eine Erhöhung der Spannung während der Anodisierung zu einer Erhöhung der Stromdichte und zu einer Verkürzung der Anodisierungszeit führt. Abbildung 4 zeigt, dass auch bei einer niedrigeren Konzentration an oxidierender Oxalsäure (0,2 M) und bei niedrigeren Anodisierungstemperaturen (7.5 °C) eine Erhöhung der Spannung zu einer Verkürzung der Anodisierungszeit führt. Eine deutliche Erhöhung der Spannung (über 200 V) während der Anodisierung führt in der Regel zu einer Zerstörung des dünnen Films, zu niedrige Spannungen (unter 10 V) führen zu einer Verschlechterung der Längsordnung der Poren.

Die Aufweitung der Poren zu den Kanälen (5) mit Innenflächen (7) (Schritt v) erfolgt mit wässrigen oxidierenden Säuren bevorzugt mit wässriger Phosphorsäure (H₃PO₄), besonders bevorzugt mit wässriger Phosphorsäure (H₃PO₄) bei einer Konzentration von 3 bis 7 Gew.-% (H₃PO₄), ganz besonders bevorzugt mit wässriger Phosphorsäure (H₃PO₄) bei einer Konzentration von 5 Gew.-% (H₃PO₄). Die Ausweitung der Poren zu den Kanälen kann auch mit wässrigen alkalischen Lösungen bevorzugt mit wässrigem Kaliumhydroxid (KOH) und/oder wässrigem Natriumhydroxid (NaOH) bei einer Konzentration von 0,1 bis 5 Gew.-%, bevorzugt von 0,2-1 Gew.-%. Die Temperaturen während der Aufweitung der Poren sollten zwischen 10 und 50°C, bevorzugt zwischen 20 und 40 °C, besonders bevorzugt zwischen 25 und 35°C, ganz besonders bevorzugt zwischen 28 und 32 °C liegen. Die Zeitdauer der Aufweitung der Poren sollte zwischen 10 und 80 Minuten, bevorzugt zwischen 20 und 70 Minuten, besonders bevorzugt zwischen 30 und 60 Minuten liegen.

Die Dicke der erfindungsgemäß erzeugten Aluminiumoxidschicht liegt dabei zwischen 0,1 µm und 10 µm, bevorzugt zwischen 200 nm und 5 µm, besonders bevorzugt zwischen 500 nm und 2 µm.

Der Innendurchmesser der Kanäle liegt zwischen 10 nm und 200 nm, bevorzugt zwischen 20 nm und 180 nm, besonders bevorzugt zwischen 30 nm und 150 nm.

Die Reinigung und Trocknung des in den Schritten i bis v erzeugten Substrates (6) erfolgt auf dem Fachmann allgemein bekannten Wegen. Vorteilhaft hat sich eine gründliche mehrfache Spülung mit gereinigtem Wasser (deionisiert und/oder destilliert) und anschließende weitere Spülungen mit polaren gut verdampfbaren polaren Lösungsmitteln, z.B. Ethanol, Isopropanol erwiesen. Eine Reinigung im Ultraschallbad und Plasmareinigung können ebenfalls vorteilhaft sein. Die Trocknung kann nach dem Fachmann allgemein bekannten Verfahren bei Raumtemperatur und/oder bei Temperaturen oberhalb der Raumtemperatur erfolgen, es kann vorteilhaft sein die Trocknung bei gegenüber dem Atmosphärendruck verminderten Werten durchzuführen.

Unter Silanisierung (Schritt vii) wird dabei die Anbindung einer Silanverbindung der allgemeinen Formel RₘSiXₙ mit m+n=4 verstanden. Wobei X eine hydrolysierbare Gruppe darstellt, welche mit den OH-Gruppen an der Innenfläche der Kanäle in einer Kondensationsreaktion eine Verbindung bilden kann. Bevorzugt handelt es sich bei X um eine Alkoxygruppe, Chlorid und/oder Bromid, wobei die Alkoxygruppe besonders bevorzugt Methoxy-, Ethoxy- und/oder Propoxy - ist. Der organischen Rest R besteht aus einer verzweigten oder nicht verzweigten Alkylkette und trägt eine funktionelle Gruppe, welche die spätere kovalente Anbindung der Monomere/ Oligomere ermöglicht.

Bevorzugt sind die Silane ausgewählt aus der Gruppe:
(3-Aminopropyl)trimethoxysilane, (3-Mercaptopropyl)trimethoxysilane, (3-Aminopropyl)-triethoxysilane, N-[3-(Trimethoxysilyl)propyl]ethylenedi-amine, (3-Glycidyloxypropyl)trimethoxysilane, [3-(2-Aminoethy]amino)propyl]trimethoxysilane, (3-Aminopropyl)triethoxysilane,Trimethoxy[3-(methyl-amino)propyl]silane, 3-Aminopropyl(diethoxy)methylsilane, (3-Aminopropyl)-triethoxysilane, 3-(Trimethoxysilyl)propyl methacrylate, 11-Acetateundecyltriethoxysilane, Allyltrichlorosilane, Allyltriethoxysilane, [3-(2-Aminoethyl-amino)propyl]trimethoxysilane, 3-Aminopropyl(diethoxy)methylsilane, (3-Aminopropyl)triethoxysilane, Azidotrimethylsilane, 11-Azidoundecyltriethoxysilane, Bis(3-(methylamino)propyl)trimethoxysilane, 1,2-Bis(trichlorosilyl)ethane, 1,6-Bis(trichlorosilyl)hexane, Bis(trichlorosilyl)methane, 1,2-Bis-(triethoxysilyl)ethane, 1,2-Bis(trimethoxysilyl)ethane, Bis[3-(trimethoxysilyl)-propyl]amine, (3-Bromopropyl)trichlorosilane, (3-Bromopropyl)trimethoxysilane, Butyltrichlorosilane, tert-Butyltrichlorosilane, Chloromethyl(methyl)-dimethoxysilane, Chloromethyltrimethoxysilane, (Chloromethyl)triethoxysilane, (3-Chloropropyl)trimethoxysilane, 3-Cyanopropyltrichlorosilane, Dichlorodiphenylsilane, Diethoxydimethylsilane, Diethoxydiphenylsilane, Diethoxy(3-glycidyloxypropyl)methylsilane, Diethoxy(methyl)phenylsilane, Diethoxy(methyl)vinylsilane, [3-(Diethylamino)propyl]trimethoxysilane, Dimethoxydiphenylsilane, Dimethoxy(methyl)octylsilane, Dimethoxy-methyl-(3,3,3-trifluoropropyl)silane, Dimethoxymethylvinylsilane, (N,N-Dimethylaminopropyl)trimethoxysilane, Dimethyl-di(methacroyloxy-1-ethoxy)silane, Dimethyloctadecyl[3-(trimethoxysilyl)propyl]ammoniumchloride, N,N-Dimethyl-4-[(trimethylsilyl)ethynyl]anilin, Diphenylsilanediol, Dodecyltriethoxysilane, Ethoxydimethylphenylsilane, Ethoxytrimethylsilane, Ethyltrimethoxysilane, 3-Glycidoxypropyldimethoxymethylsilane, 3-Glycidoxypropyldimethylethoxysilane, (3-Glycidyloxypropyl)trimethoxysilane, Hexachlorodisilane, Hexadecyltrimethoxysilane, Hexyltrimethoxysilane, (3-Iodopropyl)-trimethoxysilane, Isobutyl(trimethoxy)silane, (3-Mercaptopropyl)trimethoxy-silane, 2-(Methacryloyloxy)ethyl (3-(triethoxysilyl)propyl]carbamate, Methoxy(dimethyl)octadecylsilane, Methoxy(dimethyl)octylsilane, Methoxytrimethylsilane, 2-{3-[ω-Methylpoly(dimethylsiloxane)-α-yl]propoxylethyl {2-[(2-methylprop-2-enoyl)oxy]ethyl}carbamate, Octamethylcyclotetrasiloxane, Octenyltrichlorosilane, 1H,1H,2H,2H-Perfluorodecyltriethoxysilane, 1H,1H,2H,2H-Perfluorododecyltrichlorosilane, 1H,H,2H,2H-Perfluorooctyltriethoxysilane, Poly(dimethylsiloxane)monomethacrylate, n-Propyltriethoxysilane, p-Tolyltrichlorosilane, Trichloro[2-(chloromethyl)allyl]silane, Trichlorocyclohexylsilane, Trichlorocyclopentylsilane, Trichloro(dichloromethyl)-silane, Trichloro(hexyl)silane, Trichloro(octadecyl)silane, Trichloro(octyl)-silane, Trichloro(1H,1H,2H,2H-perfluorooctyl)silane, Trichloro(phenethyl)-silane, Trichloro(phenyl)silane, 3-(Trichlorosilyl)propylmethacrylate, Trichloro(3,3,3-trifluoropropyl)silane, Trichlorovinylsilane, Triethoxy(octyl)silane, Triethoxyphenylsilane, 3-(Triethoxysilyl)propionitrile, 3-(Triethoxysilyl)-propyl isocyanate, Triethoxyvinylsilane, Trimethoxy[3-(methylamino)propyl]-silane, Trimethoxy(octadecyl)silane, Trimethoxy(7-octen-1-yl)silane, Trimethoxy(octyl)silane,Trimethoxy[2-(7-oxabicyclo[4,1.0]hept-3-yl)ethyl]silane, Trimethoxy(2-phenylethyl)silane, Trimethoxyphenylsilane, 3-(Trimethoxysilyl)propylacrylate, N-[3-(Trimethoxysilyl)propyl]aniline, N1-(3-Trimethoxysilylpropyl)diethylenetriamine, N-[3-(Trimethoxysilyl)propyl]ethylenediamine, 3-(Trimethoxysilyl)propyl methacrylate, 1-[3-(Trimethoxysilyl)propyl]harnstoffe, Trimethoxy(3,3,3-trifluoropropyl)silane, 2-[(Trimethylsilyl)ethynyl]-anisole,Tris[3-(trimethoxysilyl)propyl]isocyanurate, Vinyltrimethoxysilane, Vinyltrimethoxysilane

Die Polymerisations-Initiatoren haben die Aufgabe die später folgende Polymerisation auf radikalischem oder ionischem Wege zu initiieren. Solche Polymerisations-Initiatoren sind dem Fachmann allgemein bekannt. Bevorzugt werden als Polymerisations-Initiatoren solche ausgewählt, die durch Einstrahlung von Licht aktivierbar sind, diese sind dem Fachmann als Photopolymerisations-Initiatoren bekannt. Bevorzugt sind die Photopolymerisations-Initiatoren ausgewählt aus der Gruppe der Acetophenone, Benzoine, Bezilderivate, Benzophenone, Chinone, Thoiaxanthone und/oder Salze.

Die Photopolymerisationsinitiatoren können dabei ausgewählt sein aus der Gruppe:
2-Benzyl-2-(dimethylamino)-4'-morpholinobutyrophenon, 4'-tert-Butyl-2',6'-dimethylacetophenon, 2,2-Diethoxyacetophenon, 2,2-Dimethoxy-2-phenylacetophenon, Diphenyl(2,4,6-trimethylbenzoyl)phosphineoxide/2-hydroxy-2-methylpropiophenon, 4-Ethoxyacetophenon, 3'-Hydroxyacetophenon, 4'-Hydroxyacetophenon, 1-Hydroxycyclohexylphenylketon, 2-Hydroxy-4'-(2-hydroxyethoxy)-2-methylpropiophenon, 2-Hydroxy-2-methylpropiophenon, 2-Methyl-4'-(methylthio)-2-morpholinopropiophenon, 4'-Phenoxyacetophenon, Benzoin, Benzoinethylether, Benzoinmethylether, 4,4'-Dimethoxybenzoin, 4,4-Dimethylbenzil, Benzophenon, Benzophenone-3,3',4,4'-tetracarboxyldianhydrid, 4-Benzoylbiphenyl, 4,4'-Bis(diethylamino)benzophenon, 4,4'-Bis-[2-(1-propenyl)phenoxy]benzophenon, 4-(Diethylamino)benzophenon, 4,4'-Dihydroxybenzophenon, 4-(Dimethylamino)benzophenon, 3,4-Dimethylbenzophenon, 3-Hydroxybenzophenon, 4-Hydroxybenzophenon, 2-Methylbenzophenon, 3-Methylbenzophenon, 4-Methylbenzophenon, Methyl benzoylformat, Michler's Keton, Bis(4-tert-butylphenyl)iodonium perfluoro-1-butanesulfonat, Bis(4-tert-butylphenyl)iodonium p-toluenesulfonat, Bis(4-tert-butylphenyl)-iodoniumtriflate, Boc-methoxyphenyldiphenylsulfoniumtriflate, (tert-Butoxycarbonylmethoxynaphthyl)-diphenylsulfonium triflat, (4-tert-Butylphenyl)-diphenylsulfoniumtriflat, Diphenyliodoniumhexafluorophosphat, Diphenyliodoniumnitrat, Diphenyliodoniumperfluoro-1-butanesulfonat, Diphenyliodonium p-toluenesulfonat, Diphenyliodoniumtriflat, (4-Fluorophenyl)diphenylsulfoniumtriflat, N-Hydroxynaphthalimidetriflat, N-Hydroxy-5-norbomen-2,3-dicarboximidperfluoro-1-butanesulfonat, (4-Iodophenyl)diphenylsulfoniumtriflat, (4-Methoxyphenyl)diphenylsulfoniumtriflat, 2-(4-Methoxystyryl)-4,6-bis(trichloromethyl)-1,3,5-triazin, (4-Methylphenyl)diphenylsulfoniumtriflat, (4-Methylthiophenyl)methylphenylsuifoniumtriflat, 1-Naphthyl diphenylsulfoniumtriflat, (4-Phenoxyphenyl)diphenylsulfoniumtriflat, (4-Phenylthiophenyl)diphenylsulfoniumtriflat, Triarylsulfoniumhexafluoroantimonat, Triphenylsulfoniumperfluoro-1-butanesufonat, Triphenylsulfoniumtriflat, Tris-(4-tert-butylphenyl)sulfonium perfluoro-1-butanesulfonat, Tris(4-tert-butylphenyl)sulfonium triflat, Anthraquinon-2-sulfonsäure Natriumsalz monohydrat, 2-tert-Butylanthraquinon, Campherchinon, Diphenyl(2,4,6-trimethylbenzoyl)-phosphineoxid, 9,10-Phenanthrenechinon, Phenylbis(2,4,6-trimethylbenzoyl)-phosphineoxid, 1-Chloro-4-propoxy-9H-thioxanthen-9-on, 2-Chlorothioxanthen-9-on, 2,4-Diethyl-9H-thioxanthen-9-on, Isopropyl-9H-thioxanthen-9-on, 10-Methylphenothiazin, Thioxanthen-9-on.

In einer bevorzugten Ausführungsform handelt es sich bei der Polyreaktion um eine sogenannte Atom Transfer Radical Polymerization (ATRP). Die Monomere und/oder Oligiomere sind organische Monomere und/oder Oligomere.

Besonders geeignete Monomere für die ATRP sind ausgewählt aus der Gruppe der Styrene, Acrylate, Methacrylate, Acrylonitrile, (Meth)acrylamide, 4-Vinyl Pyridine, Dimethyl(1-ethoxycarbonyl)vinylphosphate, 2-Acrylamido-2-Methyl-N-Propansulfonsäuren, Methacrylsäuren, Vinylchloride und/oder Vinylacetate.

Initiatoren für die ATRP können ausgewählt sein aus der Gruppe:
2-Bromopropanitril, Ethyl 2-bromoisobutyrat, Ethyl 2-bromopropionat, Methyl 2-bromopropionat, 1-phenyl ethylbromid, Tosylchlorid, 1-cyano-1-methylethyldiethyldithiocarbamt, 2-(N,N-diethyldithiocarbamyl)-isobutyric acid ethyl ester dimethyl 2,6-dibromoheptanedioat, 2-Azidoethyl 2-bromoisobutyrat, Bis[2-(2'-bromoisobutyryloxy)ethyl]disulfid, Bis[2-(2-bromoisobutyryloxy)-undecyl] disulfid, 2-Bromoisobutanoic acid N-hydroxysuccinimide ester, 2-Bromoisobutyric anhydrid, α-Bromoisobutyryl bromid, 2-(2-Bromoisobutyryloxy)ethyl methacrylat, tert-Butyl α-bromoisobutyrat, 3-Butynyl 2-bromoisobutyrat, Dipentaerythritol hexakis2-bromoisobutyrat, Dodecyl 2-bromoisobutyrat, Ethyl α-bromoisobutyrat, Ethylen bis2-bromoisobutyrat, 2-Hydroxyethyl 2-bromoisobutyrat, 1-(DL-1,2-Isopropylideneglyceryl) 2-bromoisobutyrat, Methyl α-bromoisobutyrat, 2-(4-Morpholino)ethyl 2-bromoisobutyrat, Octadecyl 2-bromoisobutyrat, Pentaerythritol tetrakis2-bromoisobutyrat, 1-(Phthalimidomethyl) 2-bromoisobutyrat, Poly(ethylene glycol) bis2-bromoisobutyrat, Poly(ethylene glycol) methyl ether 2-bromoisobutyrat, Propargyl 2-bromoisobutyrat, 1,1,1-Tris(2-bromoisobutyryloxymethyl)ethan, 10-Undecenyl 2-bromoisobutyrat.

Die erfindungsgemäße Schutzschicht ist zum Schutz von Flächen, die sich zumindest zeitweilig unter der Wasseroberfläche befinden geeignet. Insbesondere zum Schutz von Flächen bei denen eine gewisse Durchlässigkeit für elektromagnetische Strahlung insbesondere für das sichtbare Licht gegeben sein muss. Beispielsweise treten solche Flächen bei optischen Sensoren, Spektrometern, Spektrophotometern, Unterwasserkameras, Reflektoren und Leuchtmittel im marinen Bereich, sowie diversen Displays auf.

Die Allgemeinheit der Lehre nicht einschränkend soll die Erfindung im Folgenden an einigen Beispielen erläutert werden.

### Herstellung einer transparenten Oxidschicht auf einem Glas-Träger

Auf einem zuvor mit Ethanol gespültem und plasmagereinigtem Träger aus Fensterglas (Größe ca. 1 cm²) wird durch Magnetron Sputtern bei Gleichstrom (DC) eine 2 nm dicke Adhäsionsschicht aus Titan aufgebracht. (100 bis 140 W Leistung, bei Raumtemperatur Druck 0,5 Pa, Sputterrate 0,03 nm/s, (Gerät: Kurt J Lesker, PVD75).

Anschließend wird eine 0,5 µm dicke Aluminiumschicht durch Elektronenstrahlverdampfen im gleichen Gerät und ohne Unterbrechung des Vakuums unter folgenden Bedingungen aufgebracht: Druck 0,5 Pa, Spannung 7 bis 9 kV, max. Strom: 500 mA, Abscheidungsrate mindestens 0,7 nm/s.

Die Aluminiumschicht wird potentiostatisch bei einer Temperatur von 5°C in einer wässrigen 0,2 M Oxalsäurelösung bei 60 V für 2 bis 3 Minuten anodisiert. Die Beendigung der Anodisierung erfolgt sobald die Schicht transparent wird. Anschließend erfolgt eine Aufweitung der Poren zu den Kanälen in einer 5 Gew-% wässrigen Phosphorsäurelösung für ca. 52 Minuten bei 30°C.

Die Substrate werden direkt nach der Anodisierung ausgiebig mit doppeltdestilliertem Wasser gereinigt, anschließend mit Isopropanol gespült und getrocknet.

Es liegt ein Substrat mit einem mittleren Durchmesser der Kanäle von 70 nm vor, der Abstand der Kanäle beträgt 80 nm.

Abbildung 5 a) zeigt eine makroskopische Aufnahme des Substrates, es ist deutlich die Transparenz für sichtbares Licht zu erkennen.

Abbildung 5 b) zeigt die rasterelektronenmikroskopische Aufnahme des Substrates die Kanäle erscheinen schwarz. Das Inset zeigt die Probe im Querschnitt.

### Beispiel 1

Zur Silanisierung werden die gereinigten Substrate in einem Teflonhalter fixiert und in einem Vakuum-fähigen Exsikkator gegeben, zusammen mit dem in einem Injektionsfläschchen (Vial) befindlichen Silan (hier APTES: 3-Aminopropyltrimethoxysilan) und für 12 Stunden unter Vakuum gehalten. Die mit APTES beschichteten Substrate wurden dann über Nacht bei 100°C in einem Trockenschrank behandelt.

Für die später folgende Polyreaktion, in diesem Fall Atom Transfer Radical Polymerization ATRP wird trockenes Dichlormethan (DCM) als Lösungsmittel benötigt. Die Trocknung wird folgendermaßen durchgeführt:
Molekularsiebe (Porengröße: 3 Å; ca. 50 ml) werden in einem Schlenk-Kolben gegeben und auf 140 °C für 12 Stunden erwärmt, danach wird der Kolben auf Raumtemperatur unter Stickstoffatmosphäre gekühlt bevor das DCM aufgefüllt wird, Ein Septum wird an den Kolbenhals angeschlossen und zwei unterschiedlich langen Kanülen daran befestigt, wobei die längere Kanüle in das DCM reicht. Das DCM wird dann unter kontinuierlichen Durchfluss von Stickstoff für mindestens 30 Minuten getrocknet.

Die während der Silanisierung aminofunktionalisierten Substrate werden in eine Glasküvette gegeben. Es werden unter Schutzgasatmosphäre 30,0 ml getrocknetes DCM und 500µL Triethylamin (TEA) hinzugegeben und die Lösung mit Hilfe eines Eisbades auf 0°C gekühlt.

Unter konstanten Argon-Strom wird tropfenweise eine Lösung von 250 µl (2,0 µmol) 2-Bromoisobutyryl-bromide in 3-5 ml getrocknetem DCM zugegeben. Anschließend wird die Glasküvette verschlossen und das Eisbad entfernt. Nach einer Reaktionsdauer von 30 Minuten bei Raumtemperatur werden die Proben zunächst in DCM, danach in Ethylacetat und anschließend in Ethanol getaucht. Die anschließende Trocknung erfolgt durch einen konstanten Stickstoffstrom. Die Proben werden danach in einer Glasküvette unter konstantem Argon-Strom aufbewahrt.

Zur Durchführung der Polyreaktion werden 0,624 g 2,2'-Bipyridin (bipy) (4.0 mmol), 6.0 ml Wasser der Qualität "ultrapure", 24,0 ml Methanol und 9,54 ml Oligoethylen glycol methylether methacrylat (OEGMA) (33,4 mmol), welches zuvor über eine Aluminiumoxid gefüllte Kolonne gegeben wird, in einem Dreihalskolben unter Argon-Atmosphäre vorgelegt. Es wird zur Reinigung für 45 Minuten Argon durch die Lösung geleitet. Es werden anschließend 0,286 g Kupferbromid (2,0 mmol) im Argon-Gegenstrom zugegeben. Die Lösung wird im Argon-Gegenstrom mittels eines Edelstahlrohres in die Glasküvette mit den Proben gegeben. Anschließend wird die Glasküvette verschlossen.

Die einsetzende Polyreaktion wird für bei Raumtemperatur und unter konstantem Argon-Strom durchgeführt. Anschließend werden die mit Poly(oligoethylen glycol) methyl ether methacrylat (POEGMA) beschichteten Substrate mit Methanol gereinigt und im Stickstoffstrom getrocknet. Zur Beschichtung von Glas-Trägern der Größe 10 cm x 10 cm werden bei gleichem Vorgehen die folgenden Mengen an Chemikalien verwendet:

| | |
|---|---|
| Dichlormethan (DCM): | 570 ml |
| Triethylamin (TEA): | 8500 µl |
| 2-Bromoisobutyryl-bromide: | 4250 µl |
| 2,2'-Bipyridin (bipy): | 9.9840 g |
| Wasser der Qualität "ultrapure": | 96 ml |
| Methanol: | 384 ml |
| OEGMA: | 152.64 ml |
| Kupferbromid (CuBr): | 4.576 g |

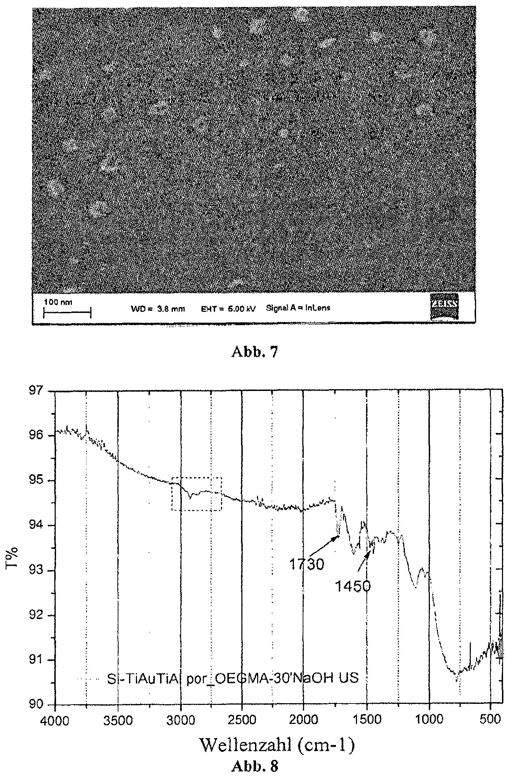

Abbildung 6 zeigt das FTIR-Spektrum (FT-IR Spectrometer Frontier, Perkin Elmer) der erfindungsgemäßen Schichten es sind die für OEGMA typischen Schwingungen gezeigt. Nachweis der Ankopplung von POEGMA über die gesamte Porentiefe:
Die poröse Aluminiumoxidschicht wurde mit einer NaOH-Lösung progressiv aufgelöst und IR-Spektren aufgenommen. Abbildung 7 zeigt eine REM-Aufnahme (Gerät: Zeiss Ultra Plus) nach Auflösung der Aluminiumoxidschicht durch 30-minütige Behandlung mit Natronlauge im Ultraschallbad. Es sind nur noch die Abdrücke der Kanäle zu sehen.

Nach Entfernung der Aluminiumoxidschicht sind die charakteristischen Schwingungen des OEGMA immer noch detektierbar. Dieses ist in Abbildung 8 zu sehen, welche das FTIR-Spektrum nach Entfernung der Aluminiumoxidschicht zeigt. Damit ist der Nachweis erbracht, dass das Polymer nicht nur an der Oberfläche vorhanden ist, sondern ebenfalls in den Kanälen.

### Beispiel 2 für die Beschichtung der Innenflächen (7) der Kanäle

Herstellung von Poly(OEGMA) Bürsten auf einem Substrat durch Photopolymerisation:
Als Substrat wird ebenfalls das wie zuvor beschrieben erzeugte Glas mit Aluminiumoxid mit einem mittleren Durchmesser der Kanäle von 70 nm und einem Abstand der Kanäle von 80 nm verwendet. Wichtig ist bei Erzeugung der PolymerSchicht via Photopolymerisation dass die mittleren Abstände und die mittleren Durchmesser der Kanäle unterhalb der Wellenlänge der zur Initiierung der Polymerisation benötigten Strahlung liegen.

Das Substrat wird zunächst durch Eintauchen in Ethanol (99 %) im Ultraschallbad für 15 Minuten und danach in einem Plasma-Reiniger für 1 Minute gereinigt. Anschließend wird das gereinigte Substrat für 60 Minuten bei Raumtemperatur in eine 20 %-ige Lösung von 3-(Trimethoxysilyl) propyl-methacrylat in absolutem Ethanol getaucht. Das silanisierte Substrat wird dann mit Ethanol (99 %) gewaschen, mit Stickstoff-Gas getrocknet und für 60 Minuten in einen Ofen bei 60°C verbracht.Das silanisierte Substrat wird in eine Quarz-Küvette platziert, anschließend werden 600 µL einer frischen 5 Gew.-% Benzophenon Lösung (Initiator) in absolutem Ethanol zugegeben. Die Quarz-Küvette wird danach mit Parafilm verschlossen.

Anschließend erfolgt die Photopolymerisation des Initiators (Benzophenon), hierzu wird für 30 Minuten mit UV-Licht (Wellenlänge: 250-450 nm) bestrahlt. Der Abstand der Lichtquelle beträgt 6 cm. Nach der Photopolymerisation des Initiators (Benzophenon), wird mit Ethanol (99 %) gespült, um ungebundene Initiator-Moleküle zu entfernen. Anschließend werden 600 µl einer frischen 0.1 mol/L Lösung des Oligomers (OEGMA) in Ethanol zugegeben. Als Reaktionsgefäß wird eine Quarzküvette verwendet. Zur Reaktion wird die Quarzküvette mit Parafilm verschlossen. Anschließend wird für 30 Minuten mit UV-Licht (Wellenlänge: 250-450 nm) bestrahlt. Der Abstand der Lichtquelle beträgt ebenfalls 6 cm. Anschließend wird mit Ethanol (99 %) gewaschen, um die nicht umgesetzten hydrophilen Monomer-Moleküle zu entfernen. Danach erfolgt eine Trocknung mit Stickstoff-Gas. Es sind im FTIR-Spektrum der erfindungsgemäßen Schichten ebenfalls die für OEGMA typischen Schwingungen zu sehen.

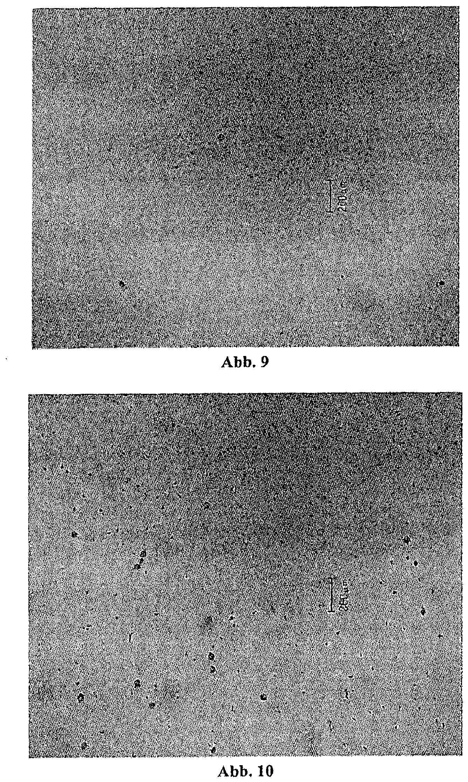

Demonstration der Antifouling-Eigenschaften der erfindungsgemäßen Überzüge:
Es wurde ein Träger aus Borosilicatglas (3x3 cm², pgo, Iserlohn ) mit einer erfindungsgemäßen Schutzschicht aus Matrix Aluminiumoxid, mit einer Beschichtung Poly(oligoethylen glycol) methyl ether methacrylat (POEGMA)) und ein nicht mit einer Schutzschicht versehener Träger der gleichen Sorte (3x3 cm², pgo, Iserlohn ) zum Vergleich für 4 Wochen in einen Mikroalgentank (Nanobecken, Petrobel, Algensorte: Nannochloropsis Salina, Korallenzucht Moers, 1:5 verdünnt, Nährlösung Meersalz und Spezialdünger von Tropic Marin) bei Raumtemperatur gelagert. Anschließend wurden die Objektträger-Proben durch dreimaliges Tauchen in einen Frischwassertank (das Wasser wurde jeweils erneuert) von nicht adhärenten Partikeln gereinigt. Abbildung 9 zeigt den mit einer erfindungsgemäßen Schutzschicht versehenen Objektträger, Abbildung 10 den unbeschichteten Objektträger zum Vergleich. Es ist deutlich zu erkennen das, der mit einer erfindungsgemäßen Schutzschicht versehene Objektträger deutlich weniger adhärente Mikroalgen aufweist.

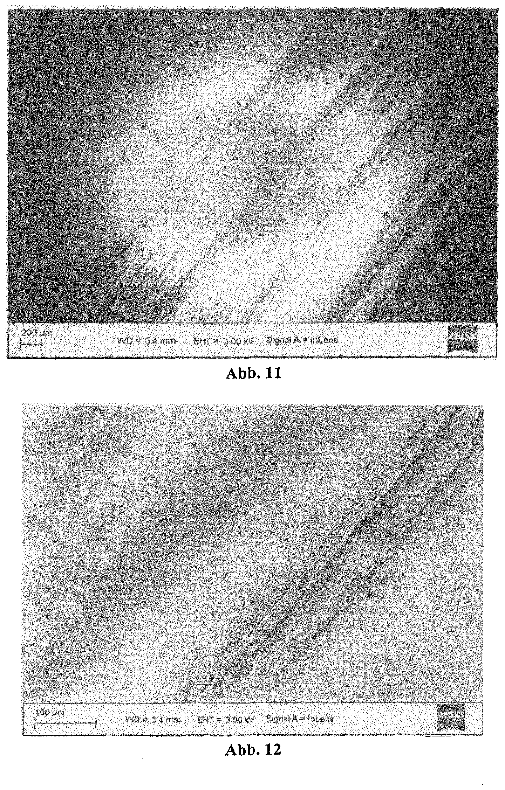

Demonstration der Kratzfestigkeit der erfindungsgemäßen Überzüge:
Die Kratzfestigkeit wurde anhand des Bleistifttests, wie in der DE 101 51 853 C1 beschrieben ist, durchgeführt. Die Bleistiftminen werden dabei zweiseitig so angeschliffen, dass eine Schneide entsteht. Die Schneide wird manuell auf die Beschichtung aufgesetzt und vorwärtsgeschoben. Ist die Bleistiftmine härter als die Beschichtung so entsteht eine Einkerbung auf der Oberfläche der Beschichtung. Es wurden kommerziell erhältliche Bleistifte der Marke Faber-Castell mit dem Härtegrad 4H "sehr hart" verwendet. Die Ergebnisse zeigen keinerlei Verletzung der Schicht. Abbildung 11 und 12 zeigen die Makroaufnahmen (Gerät: Zeiss Ultra Plus) der erfindungsgemäßen Schicht nach dem Bleistifttest bei verschiedenen Vergrößerungen. Die Oberfläche ist intakt. Der Bleistift wird hingegen abrasiert, mit Materialdepot auf der Oberfläche.

Nachweis der Beschichtung der Innenflächen der Kanäle mit organischen Polymeren:

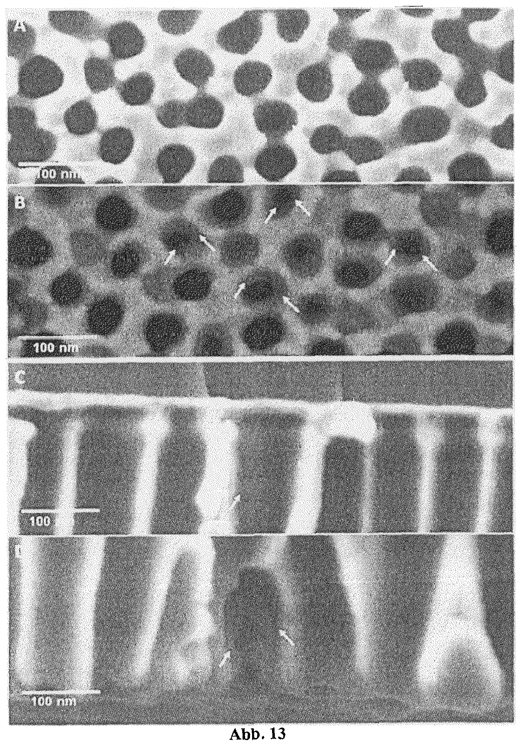

Abbildung 13 zeigt die REM Aufnahmen (Gerät: Zeiss Ultra Plus) einer POEGMA beschichteten anodisierten Aluminiumoxidschicht (AAO). Die Polymerisationsdauer betrug 60 Minuten.

Die Abbildungen 13 (A) und 13 (B) zeigen die Draufsicht auf die Porenstruktur, die mit Pfeilen markierten grauen Schatten zeigen den POEGMA-Film an den Poreninnenwänden. In Abbildung 13 (B) wurde ein hochauflösender EsB-Detektor verwendet, welcher die chemischen Kontraste deutlicher macht. In den Abbildungen 13 (C) und 13 (D) ist die Seitenansicht dargestellt, es ist zu erkennen, dass die Beschichtung mit POEGMA an den Innenflächen der Kanäle sich über die gesamte Länge der Kanäle erstreckt.

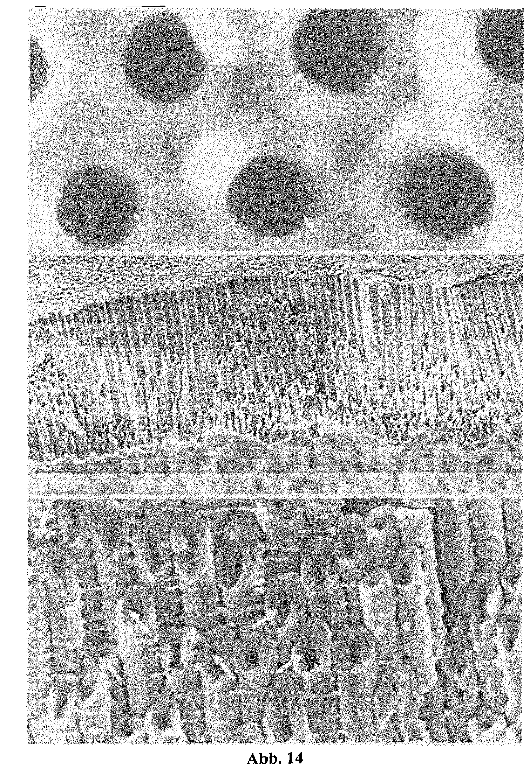

Abbildung 14 zeigt die hochauflösenden REM Aufnahmen (Gerät: Zeiss Ultra Plus) einer erfindungsgemäßen POEGMA beschichteten anodisierten Titandioxidschicht Die Polymerisationsdauer betrug ebenfalls 60 Minuten.

Abbildung 14 (A) zeigt die Draufsicht, es sind die POEGMA-Beschichtungen der Poreninnenwände zu erkennen (Pfeile). Abbildung 14 (B) zeigt den Querschnitt der Kanäle, nachdem mit einem Diamantwerkzeug ein Schnitt gemacht wurde in Abbildung 14 (C) ist die innere POGMA-Beschichtung (Pfeile) der in verschiedenen Tiefen angeschnittenen Kanäle zu erkennen. In Abbildung 14 (D) ist eine REM Aufnahme mit hochauflösendem EsB-Detektor zu sehen. Es sind die unteren Abschnitte der Kanäle zu sehen. Die Anwesenheit von POEGMA auch hier im unteren Abschnitt, ist durch die grauen Ringe gut zu erkennen.

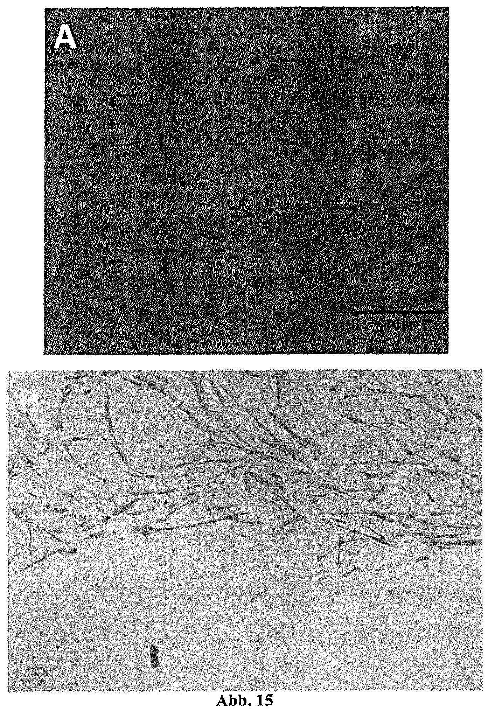

In Abbildung 15 (A) sind die fluoreszenzmikroskopischen Aufnahmen einer in Teilen erfindungsgemäßen Schutzschicht zu sehen. Es handelt sich um eine anodisierte Aluminiumoxidschicht (AAO), die mit Fluorescein-Isothiocyanat markiertem Rinderalbumin (FITC-BSA) behandelt wurde. Die Bereiche, die während der Silanisierung abgedeckt wurden und daher kein POEGMA an den Innenflächen der Kanäle aufweisen, zeigen die charakteristische Fluoreszenz des FITC-BSA. Die erfindungsgemäßen Schutzschichten, die während der Silanisierung der Proben nicht abgedeckt waren und daher POEGMA an den Innenflächen der Kanäle aufweisen, zeigen keine -bei Anwesenheit von FITC-BSA typische-Fluoreszenz.

In Abbildung 15 (B) ist die Fibroblasten-Zelladhäsion zu sehen. Die Bereiche, die während der Silanisierung abgedeckt waren und daher über keine erfindungsgemäße Schutzschicht verfügen, zeigen deutlich die Fibroblasten-Zelladhäsion. Die erfindungsgemäßen Schutzschichten, die während der Silanisierung der Proben nicht abgedeckt waren und daher POEGMA an den Innenflächen der Kanäle aufweisen, zeigen keine Fibroblasten-Zelladhäsion. (Maßstableiste 200µm).

### Verzeichnis der Abbildungen:

- Abbildung 1:: Schematische Darstellung der dreidimensionalen antiadhäsiven Schicht
- Abbildung 2:: Schematische Darstellung der Herstellung eines Substrates (6), Matrix Aluminiumoxid
- Abbildung 3:: Verlauf der Stromdichte während der Anodisierung b, 0,6 M Oxalsäure, 23.5°C
- Abbildung 4:: Verlauf der Stromdichte während der Anodisierung b, bei höheren Spannungen, 0,2 M Oxalsäure, 7.5°C
- Abbildung 5a):: Makroskopische Aufnahme eines erzeugten Substrates (6) anodisierte Aluminiumoxidschicht (AAO, transparenter Kreis in der Mitte) auf Glas
- Abbildung 5b): Rasterelektronenmikroskopische Aufnahme des Substrates (6) die Kanäle erscheinen schwarz. Das Inset zeigt die Probe im Querschnitt.
- Abbildung 6:: FTIR-Spektrum einer erfindungsgemäßen Schicht mit den für OEGMA typischen Banden
- Abbildung 7:: REM-Aufnahme nach Entfernung der Aluminiumoxidschicht durch 30 -minütige Behandlung mit Natronlauge
- Abbildung 8:: FTIR-Spektrum nach Entfernung der Aluminiumoxidschicht durch 30 -minütige Behandlung mit Natronlauge
- Abbildung 9:: Objektträger (Glas) mit erfindungsgemäßer Schutzschicht nach 4 Wochen im Mikroalgentank
- Abbildung 10:: Objektträger (Glas) ohne erfindungsgemäße Schutzschicht nach 4 Wochen im Mikroalgentank
- Abbildung 11:: Makroaufnahme der erfindungsgemäßen Schutzschicht nach dem Bleistifttest
- Abbildung 12:: Makroaufnahme der erfindungsgemäßen Schutzschicht nach dem Bleistifttest bei höherer Vergrößerung
- Abbildung 13:: REM-Aufnahmen einer an den Innenflächen der Kanäle mir POEGMA beschichteten AAO-Schicht
- Abbildung 14:: REM-Aufnahmen einer an den Innenflächen der Kanäle mit POEGMA beschichteten anodisierten Titanoxidschicht
- Abbildung 15:: Fluoreszenzmikroskopische Aufnahmen eines teilweise erfindungsgemäß beschichteten Trägers

### Bezugszeichenliste:

- 1: Träger
- 2: Adhäsionsschicht
- 3: Aluminiumschicht
- 4: Matrix aus Metall- oder Halbmetalloxid
- 5: Kanäle
- 6: Substrat
- 7: Innenfläche der Kanäle
- 8: Schutzschicht

## Patentansprüche

1. Antifouling-Schutzschicht (8) für eine Fläche,
**dadurch gekennzeichnet, dass** die Schutzschicht (8) aus einer dreidimensionalen Struktur besteht,
- wobei die dreidimensionale Struktur von Kanälen (5) in einer Matrix (4) gebildet wird und
- wobei die Kanallänge gleich oder größer ist als der Kanaldurchmesser und
- wobei die Kanäle im Wesentlichen parallel zur Flächennormale der Fläche ausgerichtet sind und
- wobei der Kanaldurchmesser 10 nm bis 200 nm, bevorzugt 20 nm bis 180 nm, besonders bevorzugt 30 nm bis 150 nm beträgt und die Kanallänge 0,01 µm bis 10 µm, bevorzugt 0,02 µm bis 10 µm, besonders bevorzugt 0,03 µm bis 10 µm beträgt,
- wobei die Kanäle über eine Innenfläche (7) verfügen und
- wobei die Innenfläche zumindest teilweise beschichtet ist und
- wobei die Beschichtung der Innenflächen organische Polymere, die ausgewählt sind aus Antifouling-Materialien, aufweist.

2. Antifouling-Schutzschicht (8) nach Anspruch 1,
**dadurch gekennzeichnet, dass** die Matrix (4) aus Metall- oder Halbmetalloxiden besteht.

3. Antifouling-Schutzschicht (8) nach Anspruch 2,
**dadurch gekennzeichnet, dass** die Metalle oder Halbmetalle der Oxide ausgewählt aus der Gruppe Aluminium (Al), Titan (Ti), Niob (Nb) und Silizium (Si) sind.

4. Antifouling-Schutzschicht nach einem der Ansprüche 2 oder 3,
**dadurch gekennzeichnet, dass** die Metalle der Oxide ausgewählt aus der Gruppe Aluminium (Al) und Titan (Ti) sind.

5. Antifouling-Schutzschicht nach einem der Ansprüche 2 bis 4,
**dadurch gekennzeichnet, dass** das Metall des Oxids Aluminium (Al) ist.

6. Antifouling-Schutzschicht nach einem der Ansprüche 2 bis 5,
**dadurch gekennzeichnet, dass** die organischen Polymere zur Beschichtung der Innenflächen (7) ausgewählt sind aus hydrophilen und/oder zwitterionischen und/oder ampholytischen Polymeren.

7. Verfahren zum Aufbringen einer Antifouling-Schutzschicht (8) unter Verwendung einer Adhäsionsschicht (2) auf einen Träger (1), umfassend die Schritte
i. Aufbringen einer Adhäsionsschicht (2) auf einem Träger (1)
ii. Aufbringen einer Metall- oder Halbmetallschicht (3) auf die Adhäsionsschicht (2)
iii. Anodisierung der Metall- oder Halbmetallschicht zu Metall- oder Halbmetalloxid
iv. Beendigung der Anodisierung anhand der Messwerte für die Stromdichte und/oder der auftretenden Transparenz der oxidierten Schicht
v. Aufweitung der Poren zu den Kanälen (5) mit Innenflächen (7)
vi. Reinigung und Trocknung des in den Schritten i.-v. erzeugten Substrates (6)
vii. Silanisierung des Substrates
viii. Aufbringen von organischen Monomeren und/oder Oligomeren
ix. Polyreaktion der Monomeren und/oder Oligomeren zu organischen Polymeren

8. Verfahren nach Anspruch 7,
**dadurch gekennzeichnet, dass** im Verfahrensschritt iii die Anodisierung der Metall- und Halbmetallschicht zu einer Matrix aus Metall- oder Halbmetalloxid (4) mit gleichzeitiger Messung der Stromschicht während des Vorgangs erfolgt.

9. Verfahren nach Anspruch 7 oder 8,
**dadurch gekennzeichnet, dass** nach der Silanisierung des Substrats gemäß Verfahrensschritt vii eine Reinigung des silanisierten Substrats gemäß Verfahrensschritt viia erfolgt.

10. Verfahren nach einem der Ansprüche 7 bis 9,
**dadurch gekennzeichnet, dass** nach der Silanisierung des Substrats gemäß Verfahrensschritt vii oder der Reinigung des silanisierten Substrats gemäß Verfahrensschritt viia Polymerisations-Initiatoren gemäß Verfahrensschritt viib aufgebracht werden, wobei die Reihenfolge der Schritte viib und viii beliebig gewählt sein kann.

11. Verfahren nach einem der Ansprüche 7 bis 10,
**dadurch gekennzeichnet, dass** die Adhäsionsschicht (2) aus Metallen besteht.

12. Verfahren nach einem der Ansprüche 7 bis 11,
**dadurch gekennzeichnet, dass** die Anodisierung in wässrigen Elektrolyt-Lösungen stattfindet.

13. Verfahren nach einem der Ansprüche 7 bis 12,
**dadurch gekennzeichnet, dass** die Aufweitung der Poren zu den Kanälen (5) mit Innenflächen (7) mit wässrigen oxidierenden Säuren erfolgt.

14. Verfahren nach Anspruch 13,
**dadurch gekennzeichnet, dass** die Aufweitung der Poren zu den Kanälen (5) mit Innenflächen (7) mit wässriger Phosphorsäure (H₃PO₄) erfolgt.

15. Verfahren nach Anspruch 12,
**dadurch gekennzeichnet, dass** die wässrigen Elektrolyt-Lösungen alkalisch sind.

## Claims

1. Antifouling protective coating (8) for a surface,
**characterised in that** the protective coating (8) consists of a three-dimensional structure,
- whereby the three-dimensional structure is formed by channels (5) in a matrix (4) and
- whereby the channel length is the same as or greater than the channel diameter and
- whereby the channels are essentially aligned parallel to the surface normal of the surface and
- whereby the channel diameter is 10 nm to 200 nm, preferably 20 nm to 180 nm, especially preferably 30 nm to 150 nm, and the channel length is 0.01 µm to 10 µm, preferably 0.02 µm to 10 µm, especially preferably 0.03 µm to 10 µm,
- whereby the channels have an inner surface (7) and
- whereby the inner surface is at least partially coated and
- whereby the coating of the inner surfaces has organic polymers selected from antifouling materials.

2. Antifouling protective coating (8) according to claim 1,
**characterised in that** the matrix (4) consists of metal or half-metal oxides.

3. Antifouling protective coating (8) according to claim 2,
**characterised in that** the metals or half-metals of the oxides are selected from the aluminium (Al), titanium (Ti), niobium (Nb) and silicon (Si) group.

4. Antifouling protective coating (8) according to one of the claims 2 or 3,
**characterised in that** the metals of the oxides are selected from the aluminium (Al) and titanium (Ti) group.

5. Antifouling protective coating (8) according to one of the claims 2 to 4,
**characterised in that** the metal of the oxide is aluminium (Al).

6. Antifouling protective coating (8) according to one of the claims 2 to 5,
**characterised in that** the organic polymers for coating the inner surfaces (7) are selected from hydrophilic and/or zwitterionic and/or ampholytic polymers.

7. Process to apply an antifouling protective coating (8) by using an adhesive layer (2) on a carrier (1), encompassing the steps
i. Application of an adhesion coating (2) on a carrier (1)
ii. Application of a metal or half-metal layer (3) on the adhesion coating (2)
iii. Anodisation of the metal or half-metal layer so it becomes a metal or half-metal oxide
iv. Completion of the anodisation by means of the measured values for the current density and/or the occurring transparency of the oxidised coating
v. Widening of the pores to the channels (5) with inner surfaces (7)
vi. Cleaning and drying of the substrate (6) created in steps i. through v.
vii. Silanisation of the substrate
viii. Application of organic monomers and/or oligomers
ix. Polyreaction of the monomers and/or oligomers to organic polymers

8. Process according to claim 7,
**characterised in that the** anodisation of the metal and half-metal layer in process step iii to become a matrix of metal or half-metal oxide (4) takes place at the same time when the current layer is measured during the procedure.

9. Process according to claim 7 or 8,
**characterised in that,** after silanisation of the substrate according to process step vii, a cleaning of the silanised substrate takes place according to process step viia.

10. Process according to one of the claims 7 to 9,
**characterised in that** polymerization initiators according to process step viib are applied after silanisation of the substrate according to process step vii or after cleaning of the silanised substrate according to process step viia, whereby the sequence of steps viib and viii can be arbitrarily chosen.

11. Process according to one of the claims 7 to 10,
**characterised in that** the adhesion coating (2) consists of metals.

12. Process according to one of the claims 7 to 11,
**characterised in that** the anodisation takes place in aqueous electrolyte solutions.

13. Process according to one of the claims 7 to 12,
**characterised in that** the widening of the pores to the channels (5) with inner surfaces (7) takes place with aqueous oxidising acids.

14. Process according to claim 13,
**characterised in that** the widening of the pores to the channels (5) with inner surfaces (7) takes place with aqueous phosphoric acid (H₃PO₄).

15. Process according to claim 12,
**characterised in that** the aqueous electrolyte solutions are alkaline.

## Revendications

1. Couche de protection antisalissure (8) pour une surface,
**caractérisée en ce que** cette couche de protection (8) est constituée par une structure tridimensionnelle,
- cette structure tridimensionnelle étant formée par des canaux (5) dans une matrice (4) et
- la longueur des canaux étant égale ou supérieure à la longueur des conduits et
- les canaux étant orientés sensiblement parallèlement à la normale à la surface et
- le diamètre des canaux étant de 10 nm à 200 nm, de préférence de 20 nm à 180 nm, de manière particulièrement préférée de 30 nm à 150 nm et la longueur des canaux étant de 0,01 µm à 10 µm, de préférence de 0,02 µm à 10 µm, de manière particulièrement préférée de 0,03 µm à 10 µm.
- les canaux disposant d'une surface intérieure (7) et
- la surface intérieure étant au moins partiellement revêtue et
- le revêtement des surfaces intérieures comportant des polymères organiques qui sont choisis parmi des matériaux antisalissure.

2. Couche de protection antisalissure (8) selon la revendication 1,
**caractérisée en ce que** la matrice (4) est constituée d'oxydes de métaux ou de métalloïdes.

3. Couche de protection antisalissure (8) selon la revendication 2,
**caractérisée en ce que** les métaux ou métalloïdes des oxydes sont choisis parmi le groupe comprenant l'aluminium (Al), le titane (Ti), le niobium (Nb) et le silicium (Si).

4. Couche de protection antisalissure selon une des revendications 2 ou 3,
**caractérisée en ce que** les métaux des oxydes sont choisis parmi le groupe comprenant l'aluminium (Al) et le titane (Ti).

5. Couche de protection antisalissure selon une des revendications 2 à 4,
**caractérisée en ce que** le métal de l'oxyde est de l'aluminium (Al).

6. Couche de protection antisalissure selon une des revendications 2 à 5,
**caractérisée en ce que** les polymères organiques pour le revêtement des surfaces intérieures (7) sont choisis parmi des polymères hydrophiles et/ou zwittérioniques et/ou ampholytiques.

7. Procédé pour appliquer une couche de protection antisalissure (8) en utilisant une couche d'adhérence (2) sur un support (1), comprenant les étapes suivantes :
i. application d'une couche d'adhérence (2) sur un support (1),
ii. application d'une couche de métal ou de métalloïde (3) sur la couche d'adhérence (2),
iii. anodisation de la couche de métal ou de métalloïde en un oxyde de métal ou de métalloïde,
iv. arrêt de l'anodisation à l'aide des valeurs de mesure pour la densité de courant et/ou la transparence produite de la couche oxydée,
v. expansion des pores pour former les canaux (5) avec des surfaces intérieures (7),
vi. nettoyage et séchage du substrat (6) produit dans les étapes i à v,
vii. silanisation du substrat,
viii. application de monomères et/ou d'oligomères organiques et
ix. polymérisation des monomères et/ou des oligomères en polymères organiques.

8. Procédé selon la revendication 7,
**caractérisé en ce que**, dans l'étape de procédé iii, l'anodisation de la couche de métal et de métalloïde en une matrice d'oxyde de métal ou de métalloïde (4) a lieu en même temps que la mesure de la densité de courant au cours du processus.

9. Procédé selon la revendication 7 ou 8,
**caractérisé en ce qu'**après la silanisation du substrat selon l'étape de procédé vii a lieu un nettoyage du substrat silanisé selon l'étape de procédé viia.

10. Procédé selon une des revendications 7 à 9,
**caractérisé en ce qu'**après la silanisation du substrat selon l'étape de procédé vii ou le nettoyage du substrat silanisé selon l'étape de procédé viia, des initiateurs de polymérisation sont appliqués selon l'étape viib, l'ordre des étapes viib et viii pouvant être choisi arbitrairement.

11. Procédé selon une des revendications 7 à 10,
**caractérisé en ce que** la couche d'adhérence (2) est constituée de métaux.

12. Procédé selon une des revendications 7 à 11,
**caractérisé en ce que** l'anodisation a lieu dans des solutions électrolytiques aqueuses.

13. Procédé selon une des revendications 7 à 12,
**caractérisé en ce que** l'expansion des pores pour former les canaux (5) avec des surfaces intérieures (7) se produit avec des acides oxydants aqueux.

14. Procédé selon la revendication 13,
**caractérisé en ce que** l'expansion des pores pour former les canaux (5) avec des surfaces intérieures (7) se produit avec de l'acide phosphorique (H₃PO₄) aqueux.

15. Procédé selon la revendication 12,
**caractérisé en ce que** les solutions électrolytiques aqueuses sont alcalines.
